(19) Europäisches Patentamt
European Patent Office
Office européen des brevets

(11) **EP 3 908 952 B1**

(12) **FASCICULE DE BREVET EUROPEEN**

(45) Date de publication et mention
de la délivrance du brevet:
**19.10.2022 Bulletin 2022/42**

(21) Numéro de dépôt: **20700071.2**

(22) Date de dépôt: **03.01.2020**

(51) Classification Internationale des Brevets (IPC):
**G06F 21/62** (2013.01)

(52) Classification Coopérative des Brevets (CPC):
**G06F 21/6254**

(86) Numéro de dépôt international:
**PCT/EP2020/050097**

(87) Numéro de publication internationale:
**WO 2020/144118 (16.07.2020 Gazette 2020/29)**

(54) **PROCÉDÉ DE CRÉATION D'AVATARS POUR PROTÉGER DES DONNÉES SENSIBLES**

AVATARERSCHAFFUNGSPROZESS ZUM SCHÜTZEN EMPFINDLICHER DATEN

METHOD OF CREATING AVATARS FOR PROTECTING SENSITIVE DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2019 FR 1900108**

(43) Date de publication de la demande:
**17.11.2021 Bulletin 2021/46**

(73) Titulaire: **BIG DATA SANTE**
**44100 Nantes (FR)**

(72) Inventeurs:
• **NEDELEC, Yohann**
**85600 BOUFFERE (FR)**
• **BREILLACQ, Olivier**
**44100 NANTES (FR)**

(74) Mandataire: **Touroude & Associates**
**2, bis rue Alfred Nobel**
**77420 Marne la Vallée (FR)**

(56) Documents cités:
**US-A1- 2012 030 165**

• **Luisa Franconi ET AL: "Community Innovation Survey: comparable dissemination", Work session on statistical data confidentiality, Manchester 17-19 December 2007, 2009 edition, 31 décembre 2009 (2009-12-31), pages 11-23, XP055633756, Luxembourg ISBN: 978-92-7-912055-8 Extrait de l'Internet: URL:https://ec.europa.eu/eurostat/document s/3888793/5844781/KS-78-09-723-EN.PDF/f977 ff33-bc9b-4d07-aec6-7dfd9ccc5d59?version=1 . 0 [extrait le 2019-10-18]**
• **VICENÃ TORRA ET AL: "Evaluating Fuzzy Clustering Algorithms for Microdata Protection", 29 juin 2004 (2004-06-29), PRIVACY IN STATISTICAL DATABASES; [LECTURE NOTES IN COMPUTER SCIENCE;;LNCS], SPRINGER-VERLAG, BERLIN/HEIDELBERG, PAGE(S) 175 - 186, XP019006163, ISBN: 978-3-540-22118-0 Section 4; page 182 Section 1; page 175, alinéa 2**

## Description

La présente invention concerne un procédé de création d'avatars à partir d'un jeu de données sensibles initiales, et comportant des attributs relatifs à une pluralité d'individus.

## Domaine technique

La protection des données sensibles, notamment des données personnelles, mises en ligne ou transmises à des tiers afin d'être utilisées, est un enjeu crucial. Les solutions actuelles visant à faire accéder des tiers, intéressés par le potentiel d'information, à des jeux de données sensibles le font en sécurisant à haut niveau la possibilité de travailler sur des fichiers sans en connaître le contenu. Bien que cela n'exclue pas la nécessité de contrôler les accès aux données, la sécurisation des données à la source, par le biais d'une réelle anonymisation, est ainsi requise.

L'anonymisation peut être définie comme l'opération de suppression de l'ensemble des informations permettant d'identifier directement ou indirectement un individu, contenues dans un document ou une base de données. Différentes méthodes pour ce faire existent.

## Technique antérieure

La méthode dite de substitution ou de « *pseudonymisation* » consiste à remplacer l'identifiant initial d'une personne par un autre identifiant arbitraire, un pseudonyme. Pour garantir la traçabilité et la mise à jour des informations dans la base et éviter d'associer à un individu les données relatives à un autre, faute de disposer d'un identifiant pérenne, il est nécessaire que, pour chaque personne, ce pseudonyme soit unique.

Pour ce faire, une table de correspondance secrète peut être générée, qui associe, une fois pour toutes, l'ensemble des identifiants avec les pseudonymes qui leur ont été attribués. Le niveau de sécurité de cette technique d'anonymisation est faible, l'opération étant réversible, puisqu'on peut retrouver l'identifiant à partir du pseudonyme et que celui qui détient la table peut lire parfaitement la base de données.

On peut également recourir à une fonction dite de « *hachage* », qui présente la particularité, par rapport aux algorithmes de chiffrement standards, de ne pas être réversible : il n'est pas possible de retrouver l'identifiant initial à partir du seul pseudonyme, même si l'on connaît la fonction de hachage utilisée. Toutefois, en dépit de cette irréversibilité de principe, cette technique peut être mise en échec en reconstituant, par réitération, une table de correspondance.

Il est possible de renforcer la sécurité de l'anonymisation en ajoutant préalablement aux identifiants initiaux une clé secrète arbitraire, qu'on soumet alors à la fonction de hachage. Celui qui souhaitera reconstituer la table de correspondance devra donc non plus seulement tester l'ensemble des noms et prénoms possibles, ce qui est relativement facile, mais aussi l'ensemble des modifications que ces identifiants sont susceptibles de connaître à partir de clés inconnues. La sécurité du dispositif repose cependant encore une fois sur la confidentialité des outils utilisés : la clé secrète d'une part, la fonction de hachage utilisée d'autre part.

Il est encore possible de durcir l'anonymisation, en procédant à un double hachage avec clé secrète, qui consiste à réaliser une première fois l'opération, et à soumettre le pseudonyme obtenu à une seconde fonction de hachage avec clé secrète. Pour assurer une pleine confidentialité, les clés peuvent être renouvelées régulièrement.

Les méthodes de suppression, de masquage ou d'ajout de bruit consistent à dégrader l'information initiale, en supprimant certaines données, ou, au contraire, en ajoutant des informations qui brouillent les données initiales. L'inconvénient de telles méthodes est de fausser, dès l'origine, les données, ce qui les rend moins pertinentes pour une utilisation autre que celle d'origine. La demande FR 3 047 586 divulgue une méthode de bruitage de données sensibles divisées en sous-ensembles, des niveaux de bruit différents, dépendant du niveau de sensibilité déterminé pour chaque sous-ensemble, étant appliqués.

Dans la demande internationale WO 2017/093736, l'anonymisation des données est réalisée à l'aide d'une ou plusieurs techniques perturbant les données d'origine, telles que l'utilisation de jetons ou « *tokens* » en anglais, la généralisation, le flou des données, l'insertion synthétique d'enregistrements, la suppression ou réorganisation d'enregistrements. Dans ces deux demandes, l'anonymisation est réalisée à travers des transformations successives sur la donnée individuelle sensible.

L'agrégation est une méthode consistant à regrouper plusieurs valeurs au sein d'une unique classe. Par exemple, des individus, originalement d'âges 25,27 et 30 ans seront catégorisés au sein d'une même tranche 25-30 ans. Plus le niveau d'agrégation est élevé, moins il y a de risques de ré-identification, mais, dans le même temps, moins l'information est précise. L'autorité en charge de la base de données doit donc trouver un équilibre satisfaisant entre la robustesse de l'anonymisation garantie par le niveau d'agrégation et la précision des données qu'elle autorise. La demande internationale WO 2018/028783 décrit un procédé permettant de rendre anonymes des ensembles de données contenant des informations sensibles, utilisant une telle méthode d'agrégation.

En outre, dans un contexte de diffusion exponentielle de données de tous ordres, publiques ou privées, sur tous les objets possibles, ce qu'on désigne parfois par le terme de « *big data* », les techniques de recoupement d'informations constituent un moyen très efficace pour percer l'anonymat des bases de données sensibles. Certaines données, plus sensibles que d'autres, comme celles relatives à l'état de santé, à la vie familiale, aux affaires judiciaires ou au patrimoine font d'ailleurs l'objet de précautions particulières, comme recommandé par la Commission Nationale de l'Informatique et des Libertés (CNIL) en France. Aucune solution ne permet de conserver l'ensemble du signal contenu dans un jeu de données tout en annihilant tout risque d'identification. Pourtant, nombreux sont les écueils qui ont eu lieu avec des techniques d'anonymisation.

Luisa Franconi ET AL: "Community Innovation Survey: comparable dissémination", Work session on statistical data confidentiality, Manchester 17-19 December 2007, 2009 edition, 31 décembre 2009, pages 11-23, Luxembourg, ISBN: 978-92-7-912055-8 (XP055633756) divulgue l'anonymisation d'une banque de données du type microdonnées par microaggrégation.

US 2012/030165 A1 divulgue l'anonymisation d'une banque de données.

VICENÃ TORRA ET AL: "Evaluating Fuzzy Clustering Algorithms for Microdata Protection", 29 juin 2004 (2004-06-29), PRIVACY IN STATISTICAL DATABASES; LECTURE NOTES IN COMPUTER SCIENCE, SPRINGER-VERLAG, BERLIN/HEIDELBERG, PAGE(S) 175 - 186, ISBN: 978-3-540-22118-0 (XP019006163) divulgue également l'anonymisation d'une banque de données du type microdonnées par microaggrégation.

**Exposé de l'invention**

En conséquence, il existe un besoin pour améliorer encore la protection des données sensibles, en les rendant non identifiables de façon irréversible, tout en gardant un maximum d'utilité aux données dans un but d'analyses.

La présente invention a précisément pour objet de répondre à ce besoin.

**Résumé de l'invention**

L'invention consiste en un procédé, un dispositif et un produit programme tels que définis dans le revendications.

La présente invention a ainsi pour objet un procédé de création d'avatars à partir d'un jeu de données sensibles initiales stockées dans une base de données d'un système informatique, lesdites données initiales comportant des attributs relatifs à une pluralité d'individus, le procédé comprenant:

a) le choix, pour des attributs relatifs à un individu donné, d'un nombre $k$ de plus proches voisins à utiliser parmi l'ensemble d'individus du jeu de données initiales,
b) l'identification, pour cet individu, des $k$ plus proches voisins parmi les autres individus du jeu de données,
c) la génération, pour au moins un attribut relatif à cet individu, d'une nouvelle valeur d'attribut à partir de grandeurs caractéristiques dudit attribut chez lesdits $k$ plus proches voisins identifiés, pondérées par un coefficient,
d) la création de données d'avatars comportant le ou les nouvelles valeurs d'attribut, afin de rendre non identifiables les données sensibles relatives à l'individu.

L'invention procure une réelle anonymisation au sens de la perte de la capacité de ré-identifier les individus dont sont issus les données. Cette création d'avatars, correspondant à des individus virtuels, de synthèse, dite « *avatarisation* », a pour objectif de s'opposer à toute une ré-identification, directe et indirecte.

L'invention est centrée sur les observations individuelles (*"data driven"* et « *patient-centric* » en anglais), et non sur un large ensemble d'individus se ressemblant.

Elle diffère de certaines méthodes connues qui se basent sur une observation de sous-groupe. Elle utilise toujours l'environnement de l'individu pour créer son avatar. Elle permet de gérer de larges volumes de données tout en maintenant les liens existants entre les variables.

Contrairement aux méthodes connues décrites ci-dessous, l'invention génère intégralement un nouvel enregistrement synthétique : l'avatar. Elle franchit une étape non atteinte par les techniques actuelles au sens où elle propose de générer intégralement une donnée de synthèse à partir de l'environnement local de la donnée originale. L'avatar est le fruit d'une généralisation locale de son environnement. Par exemple, dans le cadre de données médicales, l'avatar d'un patient est créé à partir d'individus ressemblants, dont le nombre est paramétrable.

L'invention permet de garantir le maintien de l'intérêt du jeu de données, offrant la possibilité de réaliser les mêmes analyses, par exemple statistiques ou par des méthodes d'intelligence artificielle, et d'obtenir des résultats comparables entre le jeu de données initial et les avatars.

La conservation de la structure des données initiales, c'est-à-dire leur granularité, est possible, tandis que les solutions connues avec agrégation ou généralisation proposent une bonne sécurité mais perdent en rétention du signal. Par exemple, le procédé selon l'invention permet de conserver des valeurs continues pour l'âge, 30, 32, ou 35 ans, plutôt qu'une catégorie unique, de 30 à 35 ans.

L'invention facilite l'accès aux données et offre une solution complète, rendant le procédé accessible à des personnes qui ne sont pas des experts. Cela permet de faire gagner du temps à l'utilisateur en proposant une solution clef en main et non un outil nécessitant l'intervention d'un expert (*"data-scientist"* en anglais), d'un juriste et d'un fournisseur de solution de partage de données.

Données initiales et nombre k de plus proches voisins

Par « *donnée sensible* », selon la définition de la CNIL, il faut comprendre une information concernant l'origine raciale ou ethnique, les opinions politiques, philosophiques ou religieuses, l'appartenance syndicale, la santé ou la vie sexuelle. Parmi les données sensibles se trouvent les données personnelles, notamment de santé.

Le jeu de données initiales comporte des attributs relatifs à une pluralité d'individus, et sont également appelées « *microdonnées* ». Ces données sont par exemple des enregistrements comportant des informations de patients se présentant aux urgences ou faisant appel à un organisme de soins, ou faisant partie d'une cohorte d'étude d'une maladie donnée, d'un essai clinique, ou des informations diverses relatives aux habitants d'une municipalité, ou des profils d'utilisateurs d'un service donné.

Le jeu de données initiales peut être téléchargé par interfaçage avec une base de données du système informatique sur lequel est mis en œuvre le procédé selon l'invention, ou avec une base de données d'un système informatique distant.

Les données initiales peuvent comporter au moins un attribut ayant une valeur numérique, dite variable continue, et/ou au moins un attribut appartenant à une classe représentative d'une caractéristique de l'individu, dite variable catégorielle ou attribut de classe.

Les contraintes logiques liées à la nature des attributs peuvent être spécifiées par l'utilisateur.

Une analyse multivariée est avantageusement effectuée sur les données initiales, préalablement à l'identification des $k$ plus proches voisins de l'individu, notamment une analyse en composantes principales (ACP). Cette méthode mathématique permet la réduction de la dimensionnalité d'un jeu de données en dégageant les axes de variances, de discrimination, d'informativité les plus importants, et la représentation de l'essentiel d'un jeu de données à N dimensions dans un nombre de dimensions plus restreint tout en respectant des paramètres définis par l'utilisateur, notamment par l'affectation de poids à chaque variable.

Les valeurs des attributs ainsi modifiées peuvent ensuite être projetées dans un même espace géométrique.

L'analyse multivariée, notamment en composantes principales, peut être réalisée sur des attributs catégoriels et continus.

Chaque attribut peut également être défini comme plus ou moins sensible. Ainsi, l'utilisateur peut choisir de perturber plus fortement le jeu de données pour certains attributs en particulier. Lors de l'analyse multivariée, des poids différents peuvent être affectés à chaque attribut, ce qui modifie la projection des données utilisée pour l'identification des plus proches voisins.

Par exemple, un poids important ayant été affecté à l'attribut « taille », ce dernier a un effet exacerbé et distord la projection dans l'espace euclidien. Ainsi, les distances entre les points sont particulièrement affectées par l'attribut « taille » comparativement aux autres attributs : de petites différences de tailles ont des effets plus importants sur la projection et l'environnement des patients.

Plus proches voisins

Le nombre $k$ de plus proches voisins peut être fonction des données initiales de l'individu considéré. Le nombre $k$ de plus proches voisins peut être variable, étant différent pour certains individus ou d'un individu à un autre, pour un même jeu de données initiales.

Ce paramètre peut être choisi en fonction d'un facteur de sensibilité des données initiales et/ou d'un facteur de confiance dans le destinataire destiné à recevoir les données d'avatars : plus le facteur de sensibilité est élevé et/ou plus le facteur de confiance est bas, plus le nombre $k$ est élevé, et plus le facteur de sensibilité est bas et/ou plus le facteur de confiance est élevé, plus le nombre $k$ est réduit.

Le facteur de sensibilité et le facteur de confiance peuvent être compris entre 0 et 1.

Le choix du nombre $k$ de plus proches voisins conditionne l'équilibre souhaité entre protection des données initiales et rétention du signal. Les jeux de données initiales peuvent, en effet, avoir des degrés de sensibilité variables, c'est-à-dire que les conséquences liées à leur connaissance sont différentes. Par exemple, dans le cas de données médicales, la connaissance de l'indice de masse corporelle d'une personne est moins dommageable que de savoir si cette personne est atteinte d'un cancer.

Il est également important d'estimer la confiance que l'utilisateur place dans le destinataire des données d'avatars. Par exemple, dans le cadre d'un échange de données au sein d'un même hôpital, ce niveau de confiance est plus important que si les données sont destinées à être mises en ligne publiquement.

L'invention repose sur la réalisation d'une modélisation locale à partir des plus proches voisins pour chaque enregistrement correspondant à un individu. Sur des données médicales, par exemple, cela consiste à identifier, pour chaque patient, les k patients qui lui ressemblent. Les traitements appliqués sont ainsi réalisés en fonction du voisinage unique à chaque individu. L'invention est donc centrée sur les individus et non sur un ensemble d'individus se ressemblant, et se différencie ainsi des méthodes connues qui se basent sur des observations de groupes.

Données d'avatars

Dans le cas où les données initiales comprennent au moins un attribut ayant une valeur numérique, la nouvelle valeur d'attribut correspond de préférence à un barycentre à pondération stochastique calculé à partir des valeurs de ce même attribut des k plus proches voisins, chacune pondérées par un coefficient choisi aléatoirement parmi une distribution uniforme ou exponentielle.
Un coefficient différent peut être choisi aléatoirement pour chaque valeur de l'attribut de chacun des k plus proches voisins.
Dans le cas où les attributs sont projetés dans un même espace euclidien, pour tout point M, il existe avantageusement G, le barycentre à pondération stochastique pondéré du polygone à k sommets, correspondant aux positions des k plus proches voisins :

[Math 1]

$$\sum_{i=1}^{k} \alpha_i \overrightarrow{MA_i} = \left( \sum_{i=1}^{k} \alpha_i \right) \overrightarrow{MG}$$

$\alpha_i$ : coefficient de pondération aléatoire,
$A_i$: sommet du polygone (voisin),
tel que :

[Math 2]

$$\sum_{i=1}^{k} \alpha_i \overrightarrow{GA_i} = \vec{0}.$$

Le barycentre à pondération stochastique G est avantageusement calculé dans un nombre N de dimensions correspondant au nombre d'attributs ayant une valeur numérique.
Le procédé selon l'invention permet de recentrer de façon plus importante les enregistrements marginaux pour supprimer le risque de ré-identification, en partie grâce au fait que le calcul de la nouvelle valeur d'attribut n'utilise pas directement la valeur d'origine mais uniquement son voisinage pour réaliser une généralisation locale.
Dans le cas où les données initiales comprennent au moins un attribut appartenant à une classe représentative d'une caractéristique de l'individu, la nouvelle valeur d'attribut est avantageusement choisie aléatoirement en fonction de la représentation pondérée de ladite classe parmi les k plus proches voisins, calculée selon le nombre de valeurs appartenant à ladite classe dans les k plus proches voisins pondéré par le nombre de valeurs appartenant à cette classe dans l'ensemble du jeu de données initiales.
Par exemple dans le cas d'un attribut indiquant si une patiente est enceinte ou non, les proportions des classes « *enceinte* » et « *pas enceinte* » sont calculées au sein des k plus proches voisins, puis pondérées par la représentation de ces mêmes classes dans l'ensemble du jeu de données. La nouvelle valeur d'attribut est ensuite tirée aléatoirement en fonction de cette représentation pondérée.
Cette approche permet d'allier la stochasticité du tirage aléatoire garantissant la difficulté à ré-identifier, avec l'assurance de biaiser ce tirage par la représentativité de chaque classe parmi les plus proches voisins.
Une distribution uniforme, log-normale, ou exponentielle peut être utilisée pour les calculs des coefficients aléatoires de pondération pour les attributs numériques et du choix aléatoire des nouvelles valeurs d'attribut de classe.
Les nouvelles valeurs d'attributs numériques et de classe sont avantageusement générées conjointement pour créer les données d'avatars. L'invention, aboutissant à la création de données d'avatars, correspond avantageusement à une transformation vectorielle des données initiales de l'individu.
Le jeu de données est ainsi avantageusement reconstitué à partir des variables continues et catégorielles. L'invention assure la conservation du type des attributs d'origine. Par exemple, si l'âge est un attribut prenant des valeurs entières dans le jeu de données initiales, celui-ci sera de la même forme après la création des avatars. Ce résultat diffère des méthodes de généralisation connues où plusieurs patients d'âges proches se retrouvent dans une même classe d'âge après anonymisation des données entérinant une perte d'information.

Au moins une fonction de contrainte peut être appliquée sur les données d'avatars, afin de limiter les valeurs aberrantes ou l'altération de la relation entre des attributs relatifs à un même individu, notamment pour restreindre les distributions des attributs numériques, ou respecter une relation logique entre des attributs de classe. Le minimum et le maximum d'un attribut numérique initial peuvent être utilisés pour modifier, si nécessaire, l'attribut d'avatar résultant, notamment pour ne pas faire apparaître un âge inférieur à l'âge minimum du jeu de données initiales. Une fonction de contrainte, se fondant sur des règles de relations logiques entre les différents attributs, précédemment établies, peut être appliquée, par exemple le fait qu'un homme ne peut pas être en gestation. Cela augmente encore la ressemblance entre le jeu de données initiales et les données d'avatars, et permet de conserver la cohérence des données.

Le jeu de données constitué d'avatars est avantageusement de même dimension que le jeu de données initiales.

Les traitements applicables au jeu de données initiales demeurent valides sur les données d'avatars.

Enregistrement et accès aux données d'avatars

Les données d'avatars sont avantageusement enregistrées dans une base de données du même système informatique et/ou dans celle d'un serveur distant.

Le jeu de données d'avatars peut être enregistré sous forme de fichier sur un poste local, par exemple dans le cadre d'une utilisation en interne. Dans une variante ou en combinaison, le jeu de données d'avatars peut être enregistré sur un serveur distant, notamment par téléversement via un canal de transmission, tel qu'Internet ou un intranet.

Des accès restreints peuvent être créés pour les destinataires des données d'avatars. Ceux-ci peuvent être avertis de la mise à disposition desdites données par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS. L'utilisateur peut également décider de restreindre l'accès à certains attributs, individus, ou mettre en place un nombre maximal de requêtes que le destinataire peut effectuer.

Les destinataires peuvent accéder aux données d'avatars par différents biais, tels que le téléchargement du fichier d'avatars, par exemple au format CSV, XML ou XLS, directement à partir d'un lien unique personnalisé, la navigation et le téléchargement du fichier à travers un protocole sécurisé, par exemple le protocole SFTP, une requête sécurisée sur une base de données sur un serveur distant, ou une interface de programmation (API) permettant au destinataire d'interfacer directement une de ses applications avec les données.

Dans ce dernier cas, l'utilisateur est avantageusement en mesure de fournir une version mise à jour en temps réel du jeu de données d'avatars. Ceci est particulièrement appréciable dans un contexte où l'accès à des données sensibles est susceptible d'être révoqué, par exemple suite à la mise en place du règlement général sur la protection des données, ou lorsqu'une cohorte ne cesse d'augmenter son nombre d'enregistrement, par exemple dans le cas de patients recrutés dans une étude médicale en cours.

Un rapport contenant les détails de la création des données d'avatars peut être automatiquement généré, comportant notamment les paramètres de l'analyse multivariée utilisée, le nombre d'individus et d'attributs, numériques et de classe, et le nombre $k$ de plus proches voisins. Ce rapport permet la traçabilité des opérations effectuées, et est utile pour des besoins d'archivage ou légaux. Ce rapport ne contient bien évidemment aucune information permettant de retrouver les données initiales. Notons que ce rapport ne permet en aucun cas d'inverser les opérations d'avatarisation effectuées car celui-ci ne garde pas la trace des valeurs générées aléatoirement, inhérentes au fonctionnement de la méthode.

Toutes les étapes de l'invention sont avantageusement mises en œuvre automatiquement par un ordinateur.

Produit programme d'ordinateur

L'invention a encore pour objet, selon un autre de ses aspects, un produit programme d'ordinateur pour la mise en œuvre du procédé selon l'invention de création d'avatars à partir d'un jeu de données sensibles initiales stockées dans une base de données d'un système informatique, lesdites données initiales comportant des attributs relatifs à une pluralité d'individus, le produit programme d'ordinateur comportant un support et enregistrées sur ce support des instructions lisibles par un processeur pour, lorsqu'exécutées :

a) un nombre $k$ de plus proches voisins à utiliser parmi l'ensemble d'individus du jeu de données initiales est choisi pour des attributs relatifs à un individu donné,

b) pour cet individu, les $k$ plus proches voisins parmi les autres individus du jeu de données sont identifiés,

c) pour au moins un attribut relatif à cet individu, une nouvelle valeur d'attribut est générée à partir de grandeurs caractéristiques dudit attribut chez lesdits $k$ plus proches voisins identifiés, pondérées par un coefficient, et

d) des données d'avatars comportant le ou les nouvelles valeurs d'attribut sont créées, afin de rendre non identifiables les données sensibles relatives à l'individu.

Les caractéristiques énoncées ci-dessus pour le procédé s'appliquent au produit programme d'ordinateur, et vice-versa.

Dispositif de création d'avatars

L'invention a également pour objet, selon un autre encore de ses aspects, un dispositif de création d'avatars à partir d'un jeu de données sensibles initiales stockées dans une base de données d'un système informatique, lesdites données initiales comportant des attributs relatifs à une pluralité d'individus, le dispositif comportant :

a) un module de choix configuré pour choisir un nombre $k$ de plus proches voisins à utiliser parmi l'ensemble d'individus du jeu de données initiales, pour des attributs relatifs à un individu donné,
b) un module d'identification configuré pour identifier, pour cet individu, les $k$ plus proches voisins parmi les autres individus du jeu de données,
c) un module de génération configuré pour, pour au moins un attribut relatif à cet individu, générer une nouvelle valeur d'attribut à partir de grandeurs caractéristiques dudit attribut chez lesdits $k$ plus proches voisins identifiés, pondérées par un coefficient, et
d) un module de création d'avatars configuré pour créer des données d'avatars comportant le ou les nouvelles valeurs d'attribut, afin de rendre non identifiables les données sensibles relatives à l'individu.

Le dispositif selon l'invention peut comporter en outre un module d'enregistrement configuré pour enregistrer les données d'avatars dans une base de données du même système informatique et/ou d'un serveur distant.
Le dispositif de création d'avatars peut comporter un module de spécification des contraintes logiques propres au jeu de données, liées à la nature des attributs.
Le dispositif peut comporter en outre un module de choix du nombre k de plus proches voisins.
Le dispositif de création d'avatars peut comporter un module d'évaluation de propriétés des avatars en fonction du risque de ré-identification et du risque de perte d'information.
Le dispositif de création d'avatars peut comporter un module d'avertissement configuré pour avertir les destinataires des données d'avatars de la mise à disposition desdites données par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS.
Les caractéristiques énoncées ci-dessus pour le procédé et le produit programme d'ordinateur s'appliquent au dispositif, et vice-versa.

**Brève description des dessins**

L'invention pourra être mieux comprise à la lecture de la description détaillée qui va suivre, d'exemples non limitatifs de mise en œuvre de celle-ci, et à l'examen du dessin annexé, sur lequel :

[Fig 1] illustre des étapes de création de données d'avatars à partir de données sensibles initiales selon l'invention,
[Fig 2] représente un exemple de création de données d'avatars pour un attribut d'origine numérique,
[Fig 3] illustre la répartition de la densité de probabilité des valeurs d'attributs d'avatars par rapport aux plus proches voisins de l'exemple de la figure 2,
[Fig 4] représente la position dans l'espace des données d'avatars et des données initiales,
[Fig 5] représente la différence de corrélation entre différents attributs d'un jeu de données initiales et d'un jeu de données d'avatars,
[Fig 6] représente l'évolution de la distance entre un avatar créé selon l'invention et le plus proche individu d'origine, en fonction du nombre $k$ de plus proches voisins, et
[Fig 7] représente l'évolution des distances entre le plus proche voisin et un individu, dans un jeu de données initiales, en fonction du nombre $k$ de plus proches voisins.

**Description détaillée**

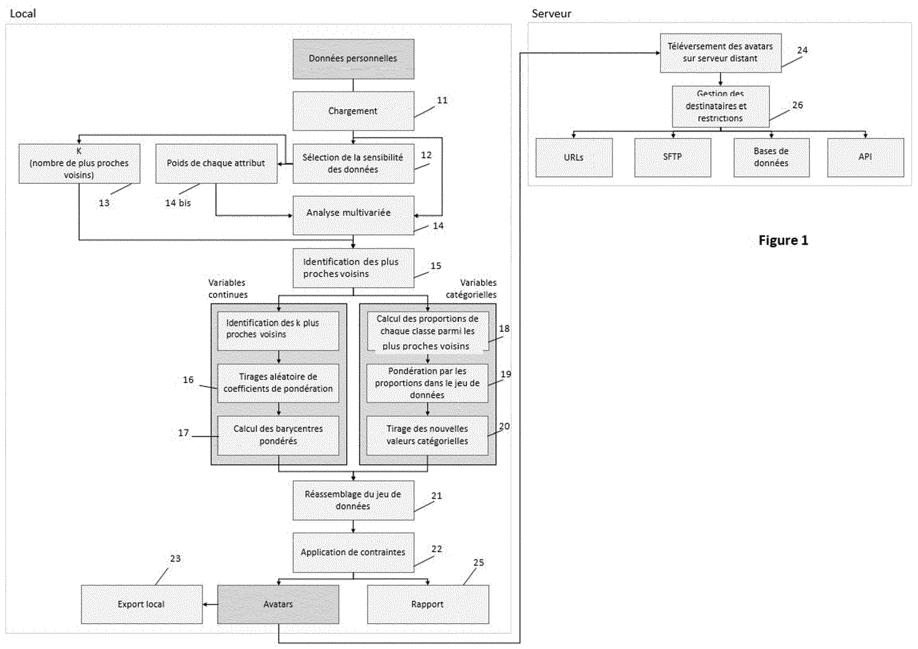

On a illustré à la figure 1 un exemple d'étapes de création de données d'avatars à partir de données sensibles initiales selon l'invention.
Dans cet exemple, lors d'une étape 11, un jeu de données initiales est téléchargé par interfaçage avec une base de données du système informatique sur lequel est mis en œuvre le procédé selon l'invention, ou avec une base de données d'un système informatique distant. Ce jeu de données initiales comporte des attributs relatifs à une pluralité d'individus, pouvant être des attributs numériques et/ou des attributs appartenant à une classe représentative d'une caractéristique de l'individu. Les contraintes logiques liées à la nature des attributs peuvent être spécifiées par l'utilisateur.

Dans une étape 12, comme décrit précédemment, des facteurs de sensibilité et de confiance sont fixés, afin de choisir, dans une étape 13, le nombre $k$ de plus proches voisins. Le nombre $k$ de plus proches voisins peut être indépendamment choisi pour chaque donnée individuelle sensible, il peut donc être lui aussi déterminé de manière locale, et varier d'un individu à l'autre pour un même jeu de données.

Lors d'une étape 14, une analyse multivariée est effectuée sur les données initiales, notamment une analyse en composantes principales, en affectant un poids à chaque attribut dans une étape 14bis. L'identification des $k$ plus proches voisins de l'individu est ainsi réalisée sur les données modifiées, dans une étape 15. Par exemple, si on affecte un poids de 0.1 à l'âge, un poids de 0.2 à l'IMC, et un poids de 0,75 au nombre de grossesses, il est ainsi spécifié que ce dernier attribut est particulièrement sensible, ce qui va distordre la projection des données lors de l'analyse multivariée.

Dans le cas d'un attribut numérique, lors d'une étape 16, un coefficient est choisi aléatoirement pour chaque valeur de l'attribut de chacun des $k$ plus proches voisins, afin de calculer, dans une étape 17, un barycentre à pondération stochastique G à partir des valeurs de ce même attribut des $k$ plus proches voisins, chacune pondérées par ce coefficient aléatoire pour obtenir les nouvelles valeurs de la donnée d'avatar. Dans le cas où les données contiennent N attributs numériques, le barycentre à pondération stochastique G est calculé dans les N dimensions, donnant ainsi toutes les nouvelles valeurs pour les attributs considérés.

Dans le cas d'un attribut appartenant à une classe représentative d'une caractéristique de l'individu, lors d'une étape 18, le nombre d'attributs appartenant à ladite classe dans les $k$ plus proches voisins est calculé, puis ce nombre, dans une étape 19, est pondéré par le nombre d'individus appartenant à cette classe dans l'ensemble du jeu de données initiales, afin de choisir aléatoirement la nouvelle valeur d'attribut en fonction de cette représentation pondérée, dans une étape 20.

Dans une étape 21, les nouvelles valeurs d'attributs numériques et de classe sont générées conjointement pour créer les données d'avatars afin de rendre non identifiables les données sensibles relatives à l'individu.

Lors d'une étape 22, les contraintes telles que définies par l'utilisateur sont appliquées sur les données d'avatars, afin de limiter les valeurs aberrantes ou l'altération de la relation entre des attributs relatifs à un même individu, comme décrit précédemment.

Le procédé selon l'invention est répété pour chaque individu. La méthode est centrée sur une observation individuelle sensible. Elle permet de générer à volonté des avatars d'individus dont les données sont sensibles, comme le feraient les méthodes connues de simulation par modélisation globale ou par rééchantillonnage.

Les données d'avatars ainsi créées peuvent être enregistrées dans une base de données du même système informatique, dans une étape 23, et/ou dans celle d'un serveur distant, lors d'une étape 24.

La gestion des destinataires des données d'avatars est effectuée lors d'une étape 26. Les données peuvent être rendues disponibles par différents moyens, tels que le téléchargement du fichier d'avatars, par exemple au format CSV, XML ou XLS, directement à partir d'un lien unique personnalisé, la navigation et le téléchargement du fichier à travers un protocole sécurisé, par exemple le protocole SFTP, une requête sécurisée sur une base de données sur un serveur distant, ou une interface de programmation (API) permettant au destinataire d'interfacer directement une de ses applications avec les données.

Les destinataires peuvent être avertis de la mise à disposition des données par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS.

Un rapport contenant les détails de la création des données d'avatars peut être automatiquement généré, dans une étape 25, ce rapport comportant par exemple les paramètres de l'analyse multivariée utilisée, le nombre d'individus et d'attributs, numériques et de classe, et le nombre $k$ de plus proches voisins.

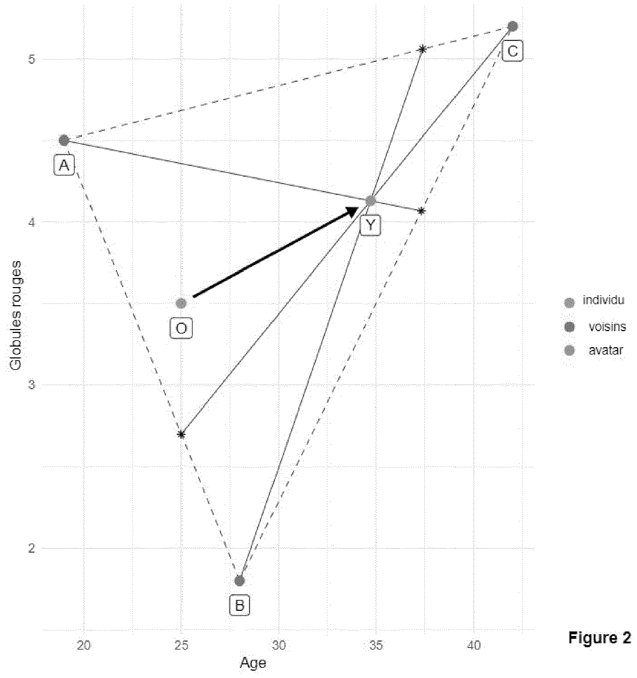

La figure 2 présente un exemple de création d'un avatar à partir de données initiales comportant des attributs quantitatifs (âge et taux de globules rouges, visible dans le tableau 1 ci-dessous). Cet exemple est réalisé sur des données brutes par souci de simplicité, mais la création des avatars se déroule avantageusement après une analyse multivariée, notamment en composantes principales.

[Tableau 1]

Tableau 1

| Individu | Age | Globules Rouges (M/ul) |
|----------|-----|------------------------|
| O | 25 3.5 | |
| A | 19 | 4.5 |
| B | 28 | 1.8 |
| C | 42 | 5.2 |

Comme visible à la figure 2, les valeurs d'attribut de chaque individu sont projetées dans un même espace euclidien. Dans cet exemple, on crée un avatar Y pour l'individu O à l'aide de 3 de ses voisins, soit $k = 3$. Les plus proches voisins de l'individu O sont identifiés. Pour chaque voisin, on tire aléatoirement un coefficient. Les coordonnées de chaque voisin avec les coefficients associés sont utilisées pour calculer le barycentre à pondération stochastique pondéré et former les données d'avatar. Dans l'exemple considéré, l'avatar Y de l'individu O a comme valeur d'attribut pour son âge 34,47, et 4,13 M/$\mu$l pour l'attribut du taux de globules rouges.

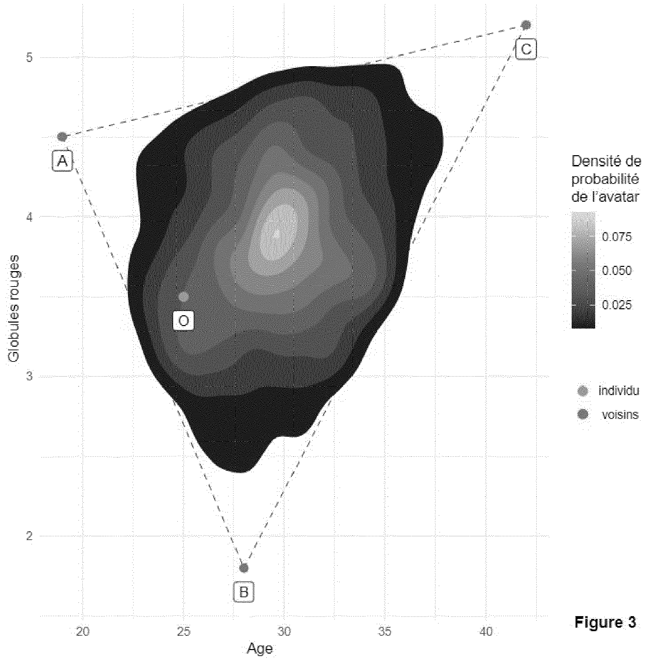

La figure 3 illustre la répartition de la densité de probabilité des valeurs d'attributs d'avatars par rapport aux plus proches voisins de l'exemple précédent. Le procédé selon l'invention étant en partie aléatoire, si un grand nombre d'avatars est créé pour un même individu, ceux-ci se répartissent dans l'espace entre les $k$ plus proches voisins selon une densité de probabilité, comme visible à la figure 3.

**Exemple**

Nous allons à présent décrire un exemple de mise en œuvre et d'efficacité de l'invention. Dans cet exemple, le jeu de données concerne des patients réels et provient de la base de données libre d'accès « *Pima indians diabetes database* », qui comporte 768 individus, 8 variables continues (nombre de grossesses, taux de glucose dans le sang, pression du sang, épaisseur de la peau, taux d'insuline dans le sang, âge, indice de masse corporelle et fonction pédigrée du diabète), et une variable catégorielle (souffre de diabète ou pas).

Une analyse en composantes principales est effectuée sur les données pour projeter le jeu de données à 9 dimensions, correspondant aux 9 attributs, par exemple dans un espace à 3 dimensions quand on souhaite visualiser les données. Le procédé selon l'invention, tel que précédemment décrit, est appliqué à l'ensemble des données. Le nombre $k$ de plus proches voisins est fixé à 50.

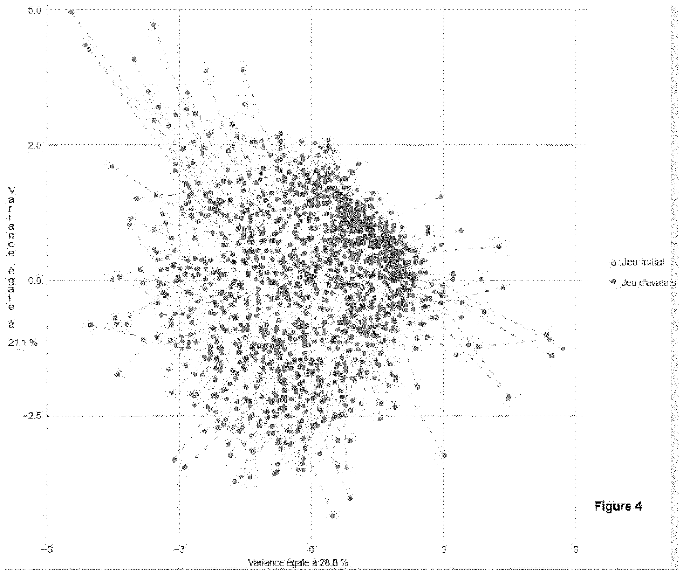

La représentation de la figure 4 montre que, pour $k = 50$ plus proches voisins considérés, la méthode selon l'invention permet d'aboutir à des données d'avatars évoluant dans un même espace que les données initiales et suppose ainsi une bonne conservation des propriétés du jeu de données d'origine. Par définition, un enregistrement marginal, c'est-à-dire un individu disposant de valeurs peu courantes, est plus sensible à une ré-identification. Grâce à l'invention, comme visible à la figure 4, les enregistrements marginaux sont partiellement dé-marginalisés et rapprochés systématiquement d'autres enregistrements. A l'opposé, un enregistrement banal génère un avatar proche des nombreux autres enregistrements qui lui sont similaires. L'avatar engendré se distingue de l'enregistrement original par ses multiples proximités avec d'autres enregistrements individuels.

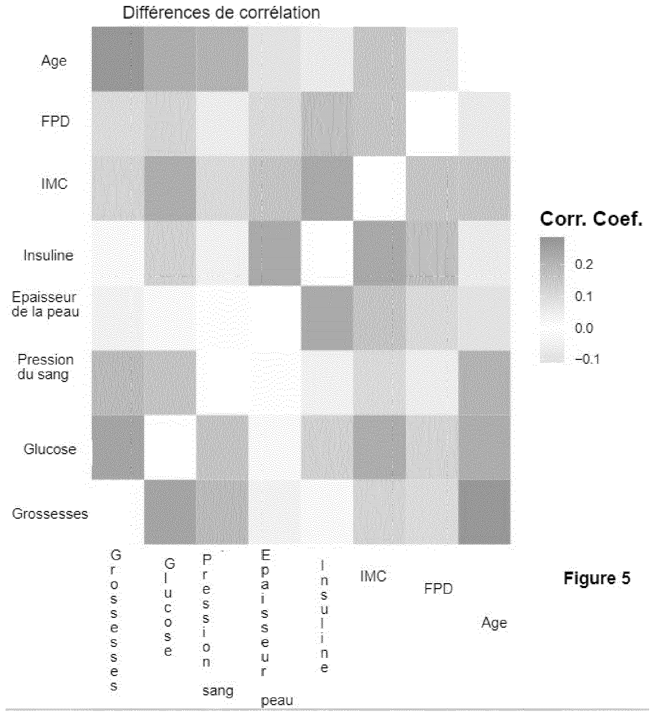

Un jeu de données ayant un intérêt statistique est composé de variables ayant des relations entre elles. L'effet de la création d'avatars sur ces relations est évalué à travers le calcul de la différence de corrélation entre les attributs du jeu de données initiales et ceux des données d'avatars. On peut observer à la figure 5 que la différence de corrélation, pour $k = 50$, est modérée et assez équilibrée : la méthode selon l'invention n'a pas altéré de façon trop importante la relation entre les attributs. Ces deux analyses permettent d'apprécier les effets globaux de l'invention sur des données. L'analyse peut être déclinée localement pour apprécier les effets locaux de l'invention sur des sous-groupes de données.

La conservation du signal peut être également validée à un premier niveau à travers la réalisation d'une même analyse sur le jeu de données initiales et sur les données d'avatars : établir un modèle de prédiction du diabète en utilisant les huit autres attributs du jeu de données. Pour cela, on entraine sur 80% du jeu de données d'avatars et sur 80% du jeu de données initiales un algorithme prédictif, par exemple des forêts aléatoires. On évalue ensuite les performances des deux modèles à l'aide des 20% restants du jeu de données original, en mesurant leur sensibilité et spécificité. Dans notre exemple portant sur le jeu de données issu du diabète, les valeurs obtenues pour ces deux mesures sont très proches : 0,575 de sensibilité pour les données initiales contre 0,553 pour les données d'avatars, et 0,868 de spécificité pour les données initiales contre 0,89 pour les données d'avatars.

Un modèle entrainé avec des avatars permet ainsi de prédire la survenue de diabète avec des performances comparables à celui d'un modèle entrainé sur des données originales. Les performances de classification de l'algorithme prédictif sont comparables et valident l'utilité des avatars dans le cadre d'analyses, par exemple statistiques ou par apprentissage automatique. La conservation des propriétés originales permet donc l'application des mêmes traitements et analyses aux données d'avatars que ceux réalisés sur le jeu de données initiales.

Dans un exemple de scénario d'attaque, un attaquant souhaiterait savoir si un individu, dont il connaît certaines informations, a choisi de participer à une étude scientifique portant sur le diabète. Pour cela, dans un cas d'étude défavorable à l'invention, il dispose des données initiales complètes comportant toutes les données sensibles relatives à cet individu, et d'un jeu de données d'avatars.

Ce cas est un exemple très extrême où l'unique information que ne détient pas l'attaquant est la présence ou non du patient dans la cohorte. Le prérequis de la connaissance de l'enregistrement original complet du patient est particulièrement audacieux, mais il permet d'analyser la situation la plus défavorable. Dans l'immense majorité des cas néanmoins, l'attaquant dispose d'informations partielles sur le patient, c'est-à-dire seulement quelques attributs, et cherche à en collecter de nouvelles.

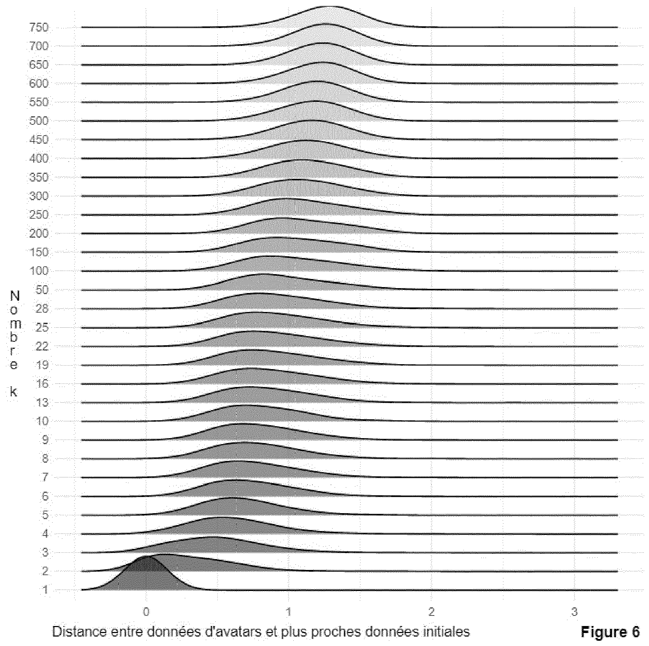

La figure 6 représente l'évolution de la distance entre un avatar et le plus proche enregistrement d'origine, en fonction du nombre $k$ de plus proches voisins. Cette distance permet d'apprécier le risque de ré-identification dans le cadre d'attaques par proximité, dans lesquelles on cherche à établir le lien entre des données d'avatars et des données initiales, dont dispose l'attaquant dans ce scénario.

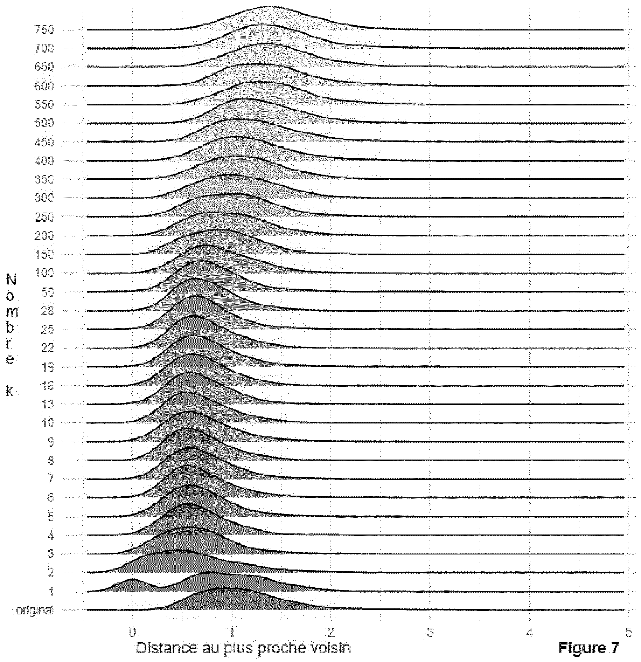

La figure 7 représente l'évolution des distances entre le plus proche voisin et un individu, dans le jeu de données initiales, en fonction du nombre $k$ de plus proches voisins. La distance entre les plus proches voisins est importante pour apprécier la densité d'un jeu de données. En comparant avec la figure précédente, on observe que pour $k$ égal à 50, la distribution de densité du jeu de données d'avatars est comparable à celle obtenue pour le jeu de données d'origine.

Bien entendu, l'invention n'est pas limitée aux exemples qui viennent juste d'être décrits. En particulier, d'autres méthodes d'analyse multivariée ou de tirages aléatoires peuvent être utilisées, ainsi que d'autres moyens de téléchargement et de téléversement des données. Ces deux exemples permettent de souligner la primauté du risque de ré-identification sur la conservation du signal dans l'invention, qui la différencie d'autres méthodes connues de simulation de données.

## Applications de l'invention

L'invention peut être utilisée dans des applications de partage de données à but d'analyse. L'avatarisation ouvre en effet la possibilité de valoriser les données sensibles dans leur granularité individuelle, non limitées aux données sensibles, auprès d'acteurs, en interne ou en externe. Le partage de ces données a pour objectif d'utiliser le potentiel d'information contenu dans des jeux de données pour servir des intérêts à la fois sur un aspect rétrospectif mais aussi sur un besoin prédictif. Les techniques d'intelligence artificielle ne sauraient condamner à choisir entre la libéralisation des données sensibles au détriment de la protection des individus et les bénéfices collectifs à en tirer.

Une structure de santé publique, telle qu'un hôpital, dispose d'une base de données avec des informations de grande valeur. Ces dernières représentent un enjeu pour la recherche médicale mais leur partage est rendu laborieux par les légitimes contraintes de la réglementation. L'invention permet, à travers la création d'avatars, à la fois de conserver la qualité des données et de respecter la confidentialité des données des patients. Une deuxième vie peut ainsi être offerte aux données de santé dont le partage améliorera la prise de décision, les pratiques, la recherche. Un recueil de données concernant des patients atteints d'une certaine pathologie peut être utilisé par un médecin comme un guide éclairant sa décision, par exemple pour choisir entre différents traitements, selon l'âge et le mode de vie du patient. Une structure de santé publique pourrait encore créer des avatars à partir de leurs données afin de prédire les besoins nécessaires pour améliorer leurs missions et alerter en amont les autorités publiques afin de mener une campagne de sensibilisation et planifier les ressources nécessaires, par exemple dans le cas d'une épidémie.

Par ailleurs, une municipalité pourrait créer des avatars à partir des données de son territoire afin de les confier à un prestataire pour détecter les zones ou les populations qui nécessitent une attention particulière. Les avatars permettent de faire de la valorisation de données ayant un potentiel, ce qui serait dans ce cas un moyen efficace de faire de la prévention contre la fracture sociale et l'accès au soin. Cela pourrait aussi permettre de cibler des actions de prévention de façon efficace et même de mettre en place, par le biais de prédiction, notamment en utilisant des techniques d'intelligence artificielle, une politique favorisant l'égalité au soin.

On pourrait imaginer, par exemple, la planification de campagnes de vaccination. Une municipalité pourrait encore utiliser les informations de santé de sa population pour prévoir et développer sa politique de développement d'espaces verts, favorisant ainsi les endroits qui en aurait besoin de façon factuelle, ou alors, pour adapter sa politique en matière de circulation alternée dans le cadre de mesures contre la pollution.

Une société de service d'abonnement permettant la diffusion de films et séries TV en streaming pourrait publier des avatars de ses clients en Open Data afin de permettre aux producteurs de films et séries de mettre en évidence des profils de clients et ainsi d'affiner leur offre.

La perspective de partage des données peut être envisagée de façon interne pour améliorer l'accès aux données ou en externe.

L'invention peut être utilisée pour aider à calculer des scores de risque sur des profils de clients avec un niveau de finesse encore jamais atteint, notamment par des assurances ou des mutuelles. Cette perspective peut encore être améliorée par la possibilité de faire du croisement de base de données par le biais d'avatars, permettant ainsi d'enrichir les enseignements.

La démocratisation des jeux de données est une opportunité pour l'enseignement et la qualité pédagogique, permettant d'améliorer les perspectives d'approches pédagogiques. L'accès à des jeux de données sous forme d'avatars permet de vulgariser l'accès aux données, sans avoir à passer par des étapes réglementaires complexes et finalement limitantes. Des étudiants peuvent se former sur des jeux de données d'avatars issus de cohortes réelles, avec des propriétés statistiques conservées.

L'invention peut être utilisée dans des applications de partage de données à but lucratif, par exemple dans le cadre d'une prestation de service rémunérée. Une entreprise pharmaceutique s'intéressant à une pathologie pourrait utiliser des données d'avatars de patient pour améliorer le développement de leur médicament.

La grande distribution pourrait valoriser des données de ticket de caisse pour établir des parcours de consommateurs valorisables auprès des fournisseurs, comprenant par exemple leurs habitudes, la fréquence et l'heure.

Le partage de données peut être réalisé dans le cadre de l'amélioration de la gestion et de la stratégie interne d'une entreprise. La protection de la vie privée des clients est une obligation pour les entreprises ou organismes. La prise en compte de la vie privée est une garantie de sérieux pour une entreprise : il en va en effet de sa réputation et de son image, et donc de la fidélité des clients à terme. Pour limiter l'impact d'une éventuelle faille informatique, une entreprise peut utiliser en production une base de données d'avatars, générés selon l'invention, et conserver les données originales, sensibles, en toute sécurité.

L'invention peut être utilisée dans des applications de partage de données à but de développement applicatif. Pour développer des applications, les faire évoluer ou les maintenir, il est nécessaire d'avoir des données en nombre suffisant. Il est en outre primordial que les données test aient des structures identiques aux données réelles, par exemple, sur un site Internet d'une banque, pour permettre le développement d'une nouvelle application de paiement bancaire, le prestataire a besoin de jeux de données qui reflètent des données réelles. Néanmoins, que ce soit pour des prestataires ou des services dédiés en interne, il est indispensable que les données utilisées à cet effet ne soient pas des données sensibles. Les avatars selon l'invention remplissent ce rôle.

L'invention, avec la création des avatars, permet de garder le potentiel d'information contenu dans les données sensibles et ne pas avoir à supprimer les données (pour respecter le RGPD). Les entreprises ont en effet intérêt à conserver les informations statistiques contenues dans les jeux de données, qui représentent un intérêt stratégique. Une société de gestion d'autoroute pourrait conserver des avatars de données d'automobilistes sans limite de temps.

Il est également envisageable que les avatars trouvent un rôle dans les procédures de gouvernance dont ils allègent les contraintes. On pourrait imaginer une gouvernance pragmatique d'usage des données où la preuve de concept partiel sur jeux de données d'avatars serait partie intégrante de l'autorisation d'accès aux données originales et au déploiement d'algorithmes.

**Revendications**

1. Procédé de création d'avatars à partir d'un jeu de données sensibles initiales stockées dans une base de données d'un système informatique, lesdites données initiales comportant des attributs relatifs à une pluralité d'individus, le procédé étant du type identifiant des plus proches voisins d'un individu parmi les autres individus du jeu de données initiales, **caractérisé en ce qu'**il comprend

   a) le choix centré sur l'individu considéré, pour des attributs relatifs à cet individu, d'un nombre ($k$) de plus proches voisins à utiliser parmi l'ensemble d'individus du jeu de données initiales,
   b) l'identification, pour cet individu, des $k$ plus proches voisins parmi les autres individus du jeu de données,
   c) la génération, pour au moins un attribut relatif à cet individu, d'une nouvelle valeur d'attribut à partir uniquement de grandeurs caractéristiques dudit attribut chez lesdits $k$ plus proches voisins identifiés, pondérées par un coefficient,
   d) la création de données d'avatars comportant le ou les nouvelles valeurs d'attribut, afin de rendre non identifiables les données sensibles relatives à l'individu.

2. Procédé selon la revendication 1, dans lequel le nombre ($k$) de plus proches voisins est choisi en fonction d'un facteur de sensibilité des données initiales et/ou d'un facteur de confiance dans le destinataire destiné à recevoir les données d'avatars, plus le facteur de sensibilité est élevé et/ou plus le facteur de confiance est bas, plus le nombre de plus proches voisins est élevé, et plus le facteur de sensibilité est bas et/ou plus le facteur de confiance est élevé, plus le nombre de plus proches voisins est réduit.

3. Procédé selon la revendication 1 ou 2, dans lequel une analyse multivariée est effectuée sur les données initiales, préalablement à l'identification des $k$ plus proches voisins de l'individu, notamment une analyse en composantes principales, les valeurs d'attribut ainsi modifiées étant ensuite notamment projetées dans un même espace euclidien.

4. Procédé selon l'une quelconque des revendications précédentes, dans lequel, les données initiales comprenant au moins un attribut ayant une valeur numérique, la nouvelle valeur d'attribut correspond à un barycentre à pondération stochastique (G) calculé à partir des valeurs de ce même attribut des $k$ plus proches voisins, chacune pondérées par un coefficient choisi aléatoirement.

5. Procédé selon la revendication précédente, dans lequel un coefficient différent est choisi aléatoirement pour chaque valeur de l'attribut de chacun des $k$ plus proches voisins.

6. Procédé selon la revendication 4 ou 5, dans lequel le barycentre à pondération stochastique (G) est calculé dans un nombre (N) de dimensions correspondant au nombre d'attributs ayant une valeur numérique.

7. Procédé selon l'une quelconque des revendications précédentes, dans lequel, les données initiales comprenant au moins un attribut appartenant à une classe représentative d'une caractéristique de l'individu, la nouvelle valeur d'attribut est choisie aléatoirement en fonction de la représentation pondérée de ladite classe parmi les $k$ plus proches voisins, calculée selon le nombre de valeurs appartenant à ladite classe dans les $k$ plus proches voisins pondéré par le nombre de valeurs appartenant à cette classe dans l'ensemble du jeu de données initiales.

8. Procédé selon l'une quelconque des revendications précédentes, dans lequel le nombre ($k$) de plus proches voisins est variable, étant différent pour certains individus ou d'un individu à un autre, pour un même jeu de données initiales.

9. Procédé selon l'une quelconque des revendications précédentes, dans lequel au moins une fonction de contrainte est appliquée sur les données d'avatars, afin de limiter les valeurs aberrantes ou l'altération de la relation entre des attributs relatifs à un même individu, notamment pour restreindre les distributions des attributs numériques, ou respecter une relation logique entre des attributs de classe.

10. Procédé selon l'une quelconque des revendications précédentes, dans lequel les données d'avatars sont enregistrées dans une base de données du même système informatique et/ou d'un serveur distant.

11. Procédé selon l'une quelconque des revendications précédentes, dans lequel les destinataires des données d'avatars sont avertis de la mise à disposition desdites données par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS.

12. Dispositif de création d'avatars à partir d'un jeu de données sensibles initiales stockées dans une base de données d'un système informatique, lesdites données initiales comportant des attributs relatifs à une pluralité d'individus, le dispositif étant du type identifiant des plus proches voisins d'un individu parmi les autres individus du jeu de données initiales, **caractérisé en ce qu'**il comporte :

a) un module de choix configuré pour choisir, en étant centré sur l'individu considéré, un nombre ($k$) de plus proches voisins à utiliser parmi l'ensemble d'individus du jeu de données initiales, pour des attributs relatifs à cet individu,
b) un module d'identification configuré pour identifier, pour cet individu, les k plus proches voisins parmi les autres individus du jeu de données,
c) un module de génération configuré pour, pour au moins un attribut relatif à cet individu, générer une nouvelle valeur d'attribut à partir uniquement de grandeurs caractéristiques dudit attribut chez lesdits $k$ plus proches voisins identifiés, pondérées par un coefficient, et
d) un module de création d'avatars configuré pour créer des données d'avatars comportant le ou les nouvelles valeurs d'attribut, afin de rendre non identifiables les données sensibles relatives à l'individu.

13. Dispositif selon la revendication précédente, comportant en outre un module d'enregistrement configuré pour enregistrer les données d'avatars dans une base de données du même système informatique et/ou d'un serveur distant.

14. Dispositif selon la revendication 12 ou 13, comportant un module d'avertissement configuré pour avertir les destinataires des données d'avatars de la mise à disposition desdites données par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS.

15. Produit programme d'ordinateur pour la mise en œuvre du procédé de création d'avatars à partir d'un jeu de données sensibles initiales stockées dans une base de données d'un système informatique, selon l'une quelconque des revendications 1 à 12, lesdites données initiales comportant des attributs relatifs à une pluralité d'individus, le produit programme d'ordinateur comportant un support et enregistrées sur ce support des instructions lisibles par un processeur pour, lorsqu'exécutées :

a) un nombre ($k$) de plus proches voisins à utiliser parmi l'ensemble d'individus du jeu de données initiales est choisi en étant centré sur l'individu considéré, pour des attributs relatifs à cet individu,
b) pour cet individu, les $k$ plus proches voisins parmi les autres individus du jeu de données sont identifiés,
c) pour au moins un attribut relatif à cet individu, une nouvelle valeur d'attribut est générée à partir uniquement de grandeurs caractéristiques dudit attribut chez lesdits $k$ plus proches voisins identifiés, pondérées par un coefficient, et
d) des données d'avatars comportant Je ou les nouvelles valeurs d'attribut sont créées, afin de rendre non identifiables les données sensibles relatives à l'individu.

**Patentansprüche**

1. Verfahren zum Erstellen von Avataren aus einem Satz sensibler Ausgangsdaten, die in einer Datenbank eines Computersystems gespeichert sind, die Ausgangsdaten umfassend Attribute, die sich auf eine Vielzahl von Personen beziehen, wobei das Verfahren von der Art ist, dass es die nächsten Nachbarn einer Person unter den anderen Personen des Ausgangsdatensatzes identifiziert, **dadurch gekennzeichnet, dass** es enthält:

a) Auswählen, auf die betrachtete Person zentriert, für Attribute, die sich auf diese Person beziehen, einer Anzahl ($k$) von nächsten Nachbarn, die unter der Gesamtheit der Personen des Ausgangsdatensatzes zu verwenden sind,,
b) Identifizieren, für diese Person, der k nächsten Nachbarn unter den anderen Personen des Datensatzes,
c) Generieren für mindestens ein Attribut, das sich auf diese Person bezieht, eines neuen Attributwerts allein aus charakteristischen Größen des Attributs bei den $k$ identifizierten nächsten Nachbarn, die mit einem Koeffizienten gewichtet sind,
d) Erstellen von Avatardaten, umfassend den/die neuen Attributwert(e), um die sensiblen Daten, die sich auf die Person beziehen, nicht identifizierbar zu machen.

2. Verfahren nach Anspruch 1, wobei die Anzahl ($k$) der nächsten Nachbarn in Abhängigkeit von einem Sensibilitätsfaktor der Ausgangsdaten und/oder einem Vertrauensfaktor gegenüber dem Empfänger, der die Avatardaten empfangen soll, ausgewählt wird, wobei die Anzahl der nächsten Nachbarn umso größer ist, je höher der Sensibilitätsfaktor und/oder je niedriger der Vertrauensfaktor ist, und die Anzahl der nächsten Nachbarn umso kleiner ist, je niedriger der Sensibilitätsfaktor und/oder je höher der Vertrauensfaktor ist.

3. Verfahren nach Anspruch 1 oder 2, wobei vor dem Identifizieren der k nächsten Nachbarn der Person eine multivariate Analyse an den Ausgangsdaten durchgeführt wird, insbesondere eine Hauptkomponentenanalyse, wobei die somit modifizierten Attributwerte danach insbesondere in denselben euklidischen Raum projiziert werden.

4. Verfahren nach einem der vorstehenden Ansprüche, wobei, die Ausgangsdaten mindestens ein Attribut enthaltend, das einen nummerischen Wert aufweist, der neue Attributwert einem stochastisch gewichteten Schwerpunkt (G) entspricht, der aus den Werten desselben Attributs der k nächsten Nachbarn berechnet wird, die jeweils mit einem nach dem Zufallsprinzip ausgewählten Koeffizienten gewichtet werden.

5. Verfahren nach dem vorstehenden Anspruch, wobei für jeden Attributwert jedes der $k$ nächsten Nachbarn nach dem Zufallsprinzip ein anderer Koeffizient ausgewählt wird.

6. Verfahren nach Anspruch 4 oder 5, wobei der stochastisch gewichtete Schwerpunkt (G) in einer Anzahl (N) von Dimensionen berechnet wird, die der Anzahl von Attributen entspricht, die einen nummerischen Wert aufweisen.

7.  Verfahren nach einem der vorstehenden Ansprüche, wobei, die Ausgangsdaten mindestens ein Attribut enthaltend, das zu einer Klasse gehört, die ein Kennzeichen der Person darstellt, der neue Attributwert nach dem Zufallsprinzip in Abhängigkeit von der gewichteten Darstellung der Klasse unter den k nächsten Nachbarn ausgewählt wird, die gemäß der Anzahl der Werte berechnet wird, die zu der Klasse in den $k$ nächsten Nachbarn gehören, die mit der Anzahl der Werte gewichtet sind, die in dem gesamten Ausgangsdatensatz zu dieser Klasse gehören.

8.  Verfahren nach einem der vorstehenden Ansprüche, wobei die Anzahl *(k)* der nächsten Nachbarn variabel ist, die für bestimmte Personen oder von einer Person zu einer anderen für denselben Ausgangsdatensatz unterschiedlich ist.

9.  Verfahren nach einem der vorstehenden Ansprüche, wobei mindestens eine Einschränkungsfunktion auf die Avatardaten angewendet wird, um Ausreißer oder die Veränderung der Beziehung zwischen Attributen, die sich auf eine selbe Person beziehen, zu begrenzen, insbesondere zum Einschränken der Verteilungen nummerischer Attribute oder Einhalten einer logischen Beziehung zwischen Klassenattributen.

10. Verfahren nach einem der vorstehenden Ansprüche, wobei die Avatardaten in einer Datenbank desselben Computersystems und/oder eines entfernten Servers aufgezeichnet sind.

11. Verfahren nach einem der vorstehenden Ansprüche, wobei die Empfänger der Avatardaten über die Bereitstellung der Daten durch ein hybrides Authentifizierungssystem benachrichtigt werden, umfassend mindestens zwei Schritte, die insbesondere auf dem Generieren und dem Übertragen eines eindeutigen Download-Links, zum Beispiel per E-Mail, und der anschließenden Übermittlung eines Schlüssels mit begrenzter Lebensdauer, zum Beispiel per SMS, beruhen.

12. Vorrichtung zum Erstellen von Avataren aus einem Satz sensibler Ausgangsdaten, die in einer Datenbank eines Computersystems gespeichert sind, die Ausgangsdaten umfassend Attribute, die sich auf eine Vielzahl von Personen beziehen, wobei die Vorrichtung von der Art ist, dass sie die nächsten Nachbarn einer Person unter den anderen Personen des Ausgangsdatensatzes identifiziert, **dadurch gekennzeichnet, dass** sie umfasst:

    a) ein Auswahlmodul, das zum Auswählen, auf die betrachtete Person zentriert, einer Anzahl *(k)* von nächsten Nachbarn konfiguriert ist, die unter der Gesamtheit der Personen des Ausgangsdatensatzes für Attribute, die sich auf diese Person beziehen, zu verwenden sind,
    b) ein Identifikationsmodul, das zum Identifizieren, für diese Person, der $k$ nächsten Nachbarn unter den anderen Personen des Datensatzes konfiguriert ist,
    c) ein Generierungsmodul, das zum Generieren, für mindestens ein Attribut, das sich auf diese Person bezieht, eines neuen Attributwerts allein aus charakteristischen Größen des Attributs bei den $k$ identifizierten nächsten Nachbarn konfiguriert ist, die mit einem Koeffizienten gewichtet sind, und
    d) ein Avatarerstellungsmodul, das zum Erstellen von Avatardaten konfiguriert ist, umfassend den oder die neuen Attributwert(e), um sensible Daten über die Person nicht identifizierbar zu machen.

13. Vorrichtung nach dem vorstehenden Anspruch, ferner umfassend ein Registrierungsmodul, das zum Aufzeichnen der Avatardaten in einer Datenbank desselben Computersystems und/oder eines entfernten Servers konfiguriert ist.

14. Vorrichtung nach Anspruch 12 oder 13, umfassend ein Warnmodul, das zum Warnen der Empfänger der Avatardaten über die Bereitstellung der Daten durch ein hybrides Authentifizierungssystem konfiguriert ist, umfassend mindestens zwei Schritte, die insbesondere auf dem Generieren und Übertragen eines eindeutigen Download-Links, zum Beispiel per E-Mail, und der anschließenden Übermittlung eines Schlüssels mit begrenzter Lebensdauer, zum Beispiel per SMS, beruhen.

15. Computerprogrammprodukt zum Implementieren des Verfahrens zum Erstellen von Avataren aus einem Satz sensibler Ausgangsdaten, die in einer Datenbank eines Computersystems gespeichert sind, nach einem der Ansprüche 1 bis 12, die Ausgangsdaten umfassend Attribute, die sich auf eine Vielzahl von Personen beziehen, das Computerprogrammprodukt umfassend ein Medium und wobei auf diesem Medium durch einen Prozessor lesbare Anweisungen aufgezeichnet sind, damit, wenn sie ausgeführt werden:

    a) eine Anzahl *(k)* von nächsten Nachbarn, die unter der Gesamtheit der Personen des Ausgangsdatensatzes zu verwenden sind, auf die betrachtete Person zentriert für Attribute ausgewählt wird, die sich auf diese Person beziehen,

b) für diese Person die *k* nächsten Nachbarn unter den anderen Personen des Datensatzes identifiziert werden,

c) für mindestens ein Attribut, das sich auf diese Person bezieht, ein neuer Attributwert allein aus charakteristischen Größen des Attributs bei den *k* identifizierten nächsten Nachbarn, die mit einem Koeffizienten gewichtet sind, generiert wird, und

d) Avatardaten, umfassend den/die neuen Attributwert(e), erstellt werden, um sensible Daten, die sich auf die Person beziehen, nicht identifizierbar zu machen.

**Claims**

1. Method for creating avatars from a set of initial sensitive data stored in a database of a computer system, said initial data comprising attributes relating to a plurality of individuals, the method identifying the nearest neighbors of an individual among the other individuals of the initial data set, **characterized in that** the method comprises:

   a) selecting, in a manner centered on the individual in question, for attributes relating to this individual, a number *(k)* of nearest neighbors to be used from among all of the individuals of the initial data set,
   b) identifying, for this individual, the *k* nearest neighbors among the other individuals of the data set,
   c) generating, for at least one attribute relating to this individual, a new attribute value solely from characteristic quantities of said attribute in said *k* identified nearest neighbors, which quantities are weighted by a coefficient,
   d) creating avatar data comprising the new attribute value(s) in order to render the sensitive data relating to the individual unidentifiable.

2. Method according to claim 1, wherein the number *(k)* of nearest neighbors is selected according to a sensitivity factor of the initial data and/or a confidence factor in the recipient intended to receive the avatar data, the higher the sensitivity factor and/or the lower the confidence factor the greater the number of nearest neighbors, and the lower the sensitivity factor and/or the higher the confidence factor the lower the number of nearest neighbors.

3. Method according to either claim 1 or claim 2, wherein a multivariate analysis, in particular a principal component analysis, is carried out on the initial data prior to the identification of the k nearest neighbors of the individual, the attribute values thus modified then in particular being projected into the same Euclidean space.

4. Method according to any of the preceding claims, wherein, with the initial data comprising at least one attribute having a numerical value, the new attribute value corresponds to a stochastically weighted barycenter (G) calculated from the values of this same attribute of the *k* nearest neighbors, each weighted by a randomly selected coefficient.

5. Method according to the preceding claim, wherein a different coefficient is randomly selected for each value of the attribute of each of the *k* nearest neighbors.

6. Method according to either claim 4 or claim 5, wherein the stochastically weighted barycenter (G) is calculated in a number (N) of dimensions corresponding to the number of attributes having a numerical value.

7. Method according to any of the preceding claims, wherein, with the initial data comprising at least one attribute belonging to a class representative of a characteristic of the individual, the new attribute value is randomly selected according to the weighted representation of said class among the *k* nearest neighbors, which representation is calculated according to the number of values belonging to said class in the *k* nearest neighbors weighted by the number of values belonging to this class in the whole of the initial data set.

8. Method according to any of the preceding claims, wherein the number *(k)* of nearest neighbors is variable, said number being different for certain individuals or from one individual to another, for the same set of initial data.

9. Method according to any of the preceding claims, wherein at least one constraint function is applied to the avatar data in order to limit aberrant values or a change in the relationship between attributes relating to the same individual, in particular to restrict the distributions of numeric attributes or to respect a logical relationship between class attributes.

10. Method according to any of the preceding claims, wherein the avatar data are recorded in a database of the same computer system and/or of a remote server.

**11.** Method according to any of the preceding claims, wherein the recipients of the avatar data are notified of the availability of said data by a hybrid authentication system comprising at least two stages, based in particular on the generation and the transmission of a unique download link, for example by e-mail, and then the communication of a key with a limited lifetime, for example by SMS.

**12.** Device for creating avatars from a set of initial sensitive data stored in a database of a computer system, said initial data comprising attributes relating to a plurality of individuals, the device identifying the nearest neighbors of an individual among the other individuals of the initial data set, **characterized in that** the device comprises:

> a) a selection module configured to select, in a manner centered on the individual in question, a number ($k$) of nearest neighbors to be used from among all of the individuals of the initial data set, for attributes relating to this individual,
> b) an identification module configured to identify, for this individual, the $k$ nearest neighbors among the other individuals of the data set,
> c) a generation module configured to generate, for at least one attribute relating to this individual, a new attribute value solely from characteristic quantities of said attribute in said k identified nearest neighbors, which quantities are weighted by a coefficient, and
> d) an avatar creation module configured to create avatar data comprising the new attribute value(s) in order to render the sensitive data relating to the individual unidentifiable.

**13.** Device according to the preceding claim, further comprising a recording module configured to record the avatar data in a database of the same computer system and/or of a remote server.

**14.** Device according to either claim 12 or claim 13, comprising a notification module configured to notify the recipients of the avatar data of the availability of said data by a hybrid authentication system comprising at least two stages, based in particular on the generation and the transmission of a unique download link, for example by e-mail, and then the communication of a key with a limited lifetime, for example by SMS.

**15.** Computer program product for implementing the method according to any of claims 1 to 12 for creating avatars from a set of initial sensitive data stored in a database of a computer system, said initial data comprising attributes relating to a plurality of individuals, the computer program product comprising a medium and instructions being recorded on this medium, which instructions can be read by a processor such that, when executed:

> a) a number ($k$) of nearest neighbors to be used is selected from among all of the individuals of the initial data set, the selection being centered on the individual in question, for attributes relating to this individual,
> b) for this individual, the $k$ nearest neighbors among the other individuals of the dataset are identified,
> c) for at least one attribute relating to this individual, a new attribute value is generated solely from characteristic quantities of said attribute in said $k$ identified nearest neighbors, which quantities are weighted by a coefficient, and
> d) avatar data comprising the new attribute value(s) are created in order to render the sensitive data relating to the individual unidentifiable.

Figure 1

Figure 2

Figure 3

Figure 4

Figure 5

Distance entre données d'avatars et plus proches données initiales

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3047586
- WO 2017093736 A
- WO 2018028783 A
- US 2012030165 A1

**Littérature non-brevet citée dans la description**

- **LUISA FRANCONI et al.** Community Innovation Survey: comparable dissémination. *Work session on statistical data confidentiality, Manchester,* 17 Décembre 2004, ISBN 978-92-7-912055-8, 11-23
- Evaluating Fuzzy Clustering Algorithms for Microdata Protection. **VICENÃ TORRA et al.** PRIVACY IN STATISTICAL DATABASES; LECTURE NOTES IN COMPUTER SCIENCE. SPRINGER-VERLAG, 29 Juin 2004, 175-186